# EUROPEAN PATENT SPECIFICATION

(11) **EP 1 744 292 B1**
(45) Date of publication and mention of the grant of the patent: **21.11.2012**
(21) Application number: 06014301.3
(22) Date of filing: 10.07.2006
(51) Int. Cl.: G06K 9/00

(54) **Method for determining position and speed of vehicles**
Verfahren zur Bestimmung von Fahrzeugposition und -Geschwindigkeit
Procédé pour déterminer la position et vitesse des véhicules

(30) Priority: 08.07.2005 NL 1029472; 23.05.2006 NL 1031867
(43) Date of publication of application: 17.01.2007
(73) Proprietor: Van de Weijdeven, Everhardus Franciscus, 5611 VK Eindhoven (NL); Markus, Joachim, 58313 Herdecke (DE)
(72) Inventor: Van de Weijdeven, Everhardus Franciscus, 5611 VK Eindhoven (NL); Markus, Joachim, 58313 Herdecke (DE)
(74) Representative: Verhees, Godefridus Josephus Maria

(56) References cited:
- EP-A- 1 276 086
- GB-A- 1 362 235
- GB-A- 2 342 800
- US-A- 5 742 699
- US-A- 5 809 161

## Description

### BACKGROUND OF THE INVENTION:

### Field of the invention

The invention relates to a method for the determination of vehicle position and speed by recording the vehicles to be measured in a number of video pictures taken by a camera successively at fixed time intervals and by analysing the recorded video pictures, whereby the video pictures are calibrated beforehand using markings on a road, which have been marked on a road at known distances apart, so that positions and measurements in the video picture can be converted into actual positions and measurements, and whereby the method comprises the following steps for determinining the speed of the vehicles:
- an initial position of a vehicle is determined at an initial point in time,
- a second position of a vehicle is determined at a later, second point in time,
- the average speed between the two positions is calculated from the difference between the first and second position and the time between the first and second point in time, and
- in which the positions of the vehicle are determined from several recorded video pictures.

### Prior art

Such a method is known from GB-A-2 342 800. In the known method a grid is superimposed on the picture in order to determine the speed and measurements of a vehicle on a road.

### Summary of the invention

An objective of the invention is to provide a method of the sort described in the preamble, which can be used to determine the speed and also the measurements of a vehicle more accurately. For this purpose, the method according to the invention is characterised in that:
- the initial and the second positions of the vehicle are determined by automatically moving in the video picture an imaginary measurement line from the known position of one of the markings to the position where the vehicle is located and by calculating the displacement of the measurement line, and
- the time between both points in time is determined by adding the number of recorded video pictures between the points in time and dividing the result by the number of recorded pictures per second. This method is defined in appended claim 1.

This means that the distance travelled between two points in time can be accurately determined when determining the speed of a vehicle, so that the speed measurement is much more accurate than in the known method. Moreover, a measurement can be determined from the difference between two accurately determined positions (e.g. the front and rear of a vehicle).

An embodiment of the method according to the invention is characterised in that in registering a traffic violation from the vehicle data with a further camera, the registration number of the vehicle concerned and/or the picture of the driver of the vehicle concerned is recorded. If it is not permitted to register the data of persons due to privacy, only offenders are registered instead of all passing vehicles. It is therefore first determined if a vehicle has committed a violation and only if this is the case this vehicle and/or its driver is recorded.

A high-resolution camera (or possibly a line scan camera) is needed to read stickers or other small details of a car passing rapidly by, such as registration numbers or if a passenger is wearing a seat belt. A very rapid shutter speed in combination with a lot of light is needed in order to ensure no movement in the picture so that very small details can be read from a taken picture. This is not currently available or possible above a motorway. To make it possible anyway to observe small details under normal light conditions and with a relatively slow shutter speed, a further embodiment of the method is characterised in that a mirror present in front of the further camera, which reflects the picture to be taken to the camera, is turned at a speed attuned to the speed of an approaching car. The speed of the approaching car is determined in the manner described above.

As the mirror turns with a speed attuned to the speed of the car, it appears to the further camera that the car is virtually stationary. This means that there is virtually no more movement of the car itself on the recorded picture (the surroundings do move in the picture but this is unimportant). This means a sharp picture of the car with a slow shutter speed so that little light is needed in spite of the high speed of the car.

Note that this embodiment can also be used independently of the above methods to obtain a sharp picture of a moving object with a relatively slow shutter speed and relatively little light.

The successively recorded video pictures are preferably numbered or provided with a time code to simplify the counting of the number of video pictures between two points in time and to retrieve stored video pictures easily.

Again a further embodiment of the method according to the invention is characterised in that the numbers or time codes of the camera and further camera are compared with each other continually or after specific time intervals and any difference is registered with a reference to the pictures concerned, so that the pictures from the different cameras that pertain to each other can be retrieved later.

### Brief description of the drawings

The invention will be elucidated more fully below on the basis of an arrangement shown in the drawings with which an embodiment of the method according to the invention can be carried out. In these drawings:
Figure 1 shows an arrangement provided with an overview camera and a registration camera;
Figure 2 shows markings on the road for the calibration of video pictures;
Figure 3 shows a video picture recorded at an initial point in time with the overview camera;
Figure 4 shows a video picture recorded with the overview camera at a later, second point in time; and

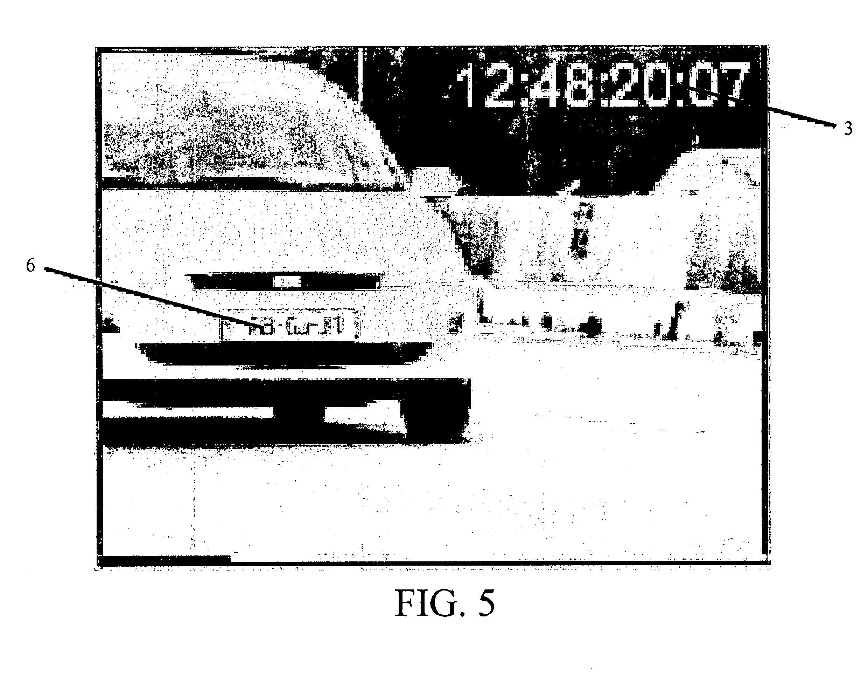

Figure 5 shows a picture recorded with the registration camera.

### Detailed description of the drawings

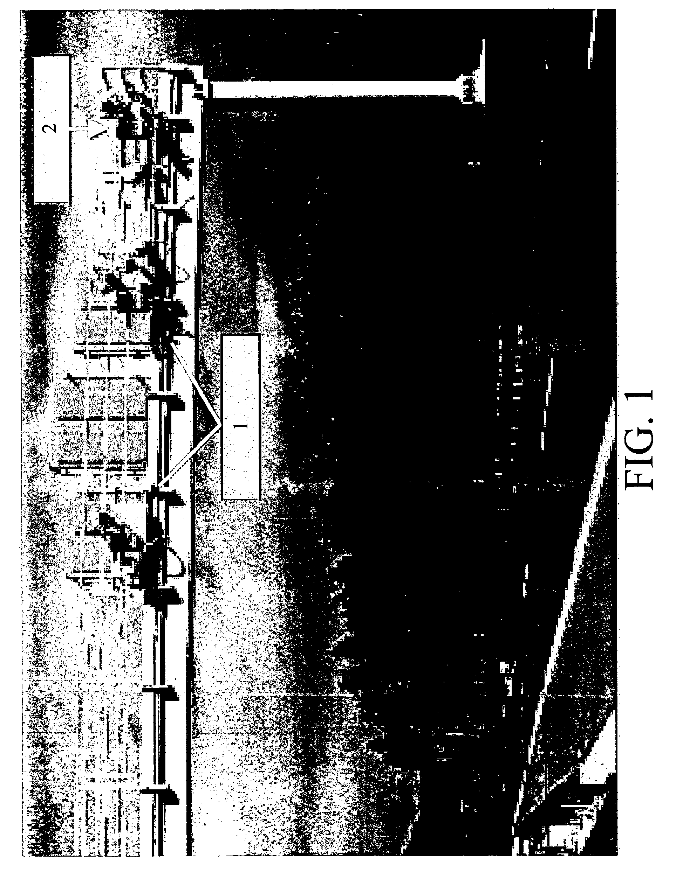

Figure 1 shows an arrangement with which an embodiment of the method according to the invention can be carried out. The arrangement comprises two overview cameras 1 (one for each driving direction) and a registration camera 2, which are installed above a road. Cameras 1 and 2 are connected to a processing unit (not shown), which analyses the pictures sent by the cameras.

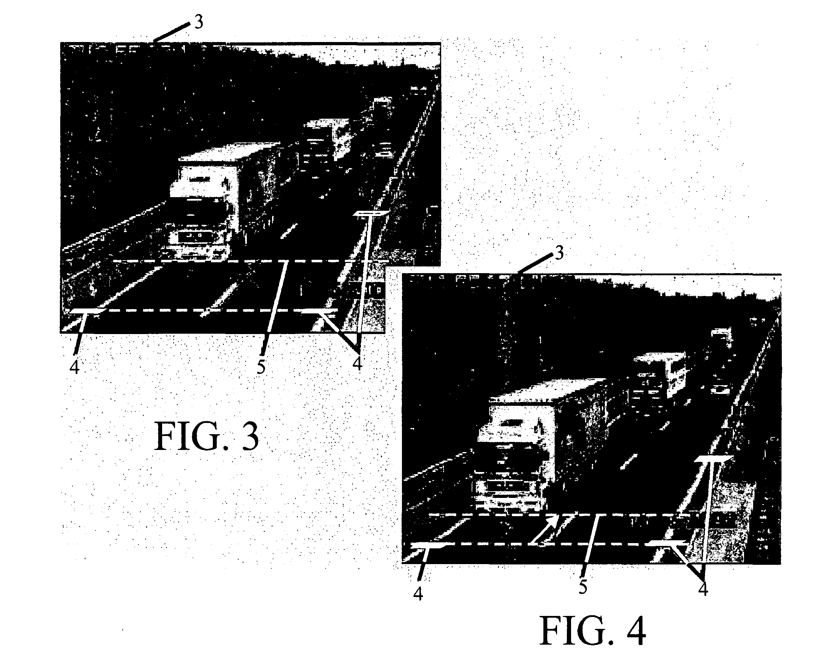

The overview camera 1 continually films a road section, see figures 3 and 4. The processing unit determines the position of a vehicle at an initial point in time by calculating the position of the vehicle in the video picture recorded at this point in time, see figure 3. The processing unit then determines a second position of the same vehicle at a later point in time by also calculating the position of the vehicle in the video picture recorded at that point in time, see figure 4.

The elapsed time between these two points in time is determined by adding the number of recorded video pictures between the video pictures recorded at these points in time and multiplying them by the time interval in which the video pictures are recorded. For example 25 video pictures per second are recorded, so that the time interval between two consecutive recordings is 40 milliseconds. To facilitate this, each recorded video picture is numbered or provided with a time code 3, so that only the numbers pertaining to the video pictures or the time codes need to be subtracted from each other.

The speed of the vehicle can be accurately calculated from the distance between both determined positions and the elapsed time.

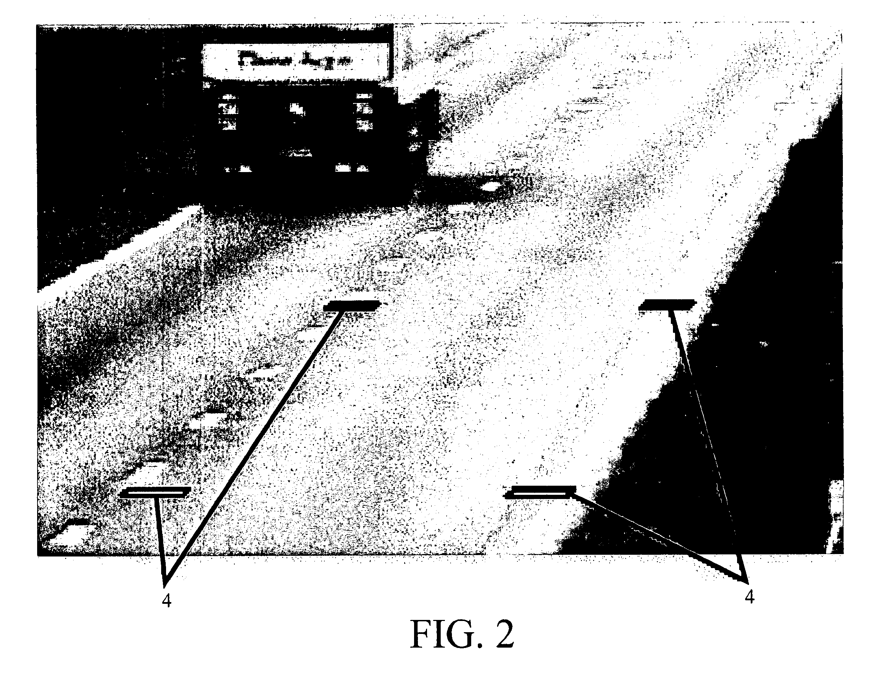

The positions of a vehicle are calculated from a video picture as follows. First the video picture is calibrated. This is done by accurately placing four markings 4 on the road at the corners of an imaginary rectangle, see figure 2. The positions of these markings and the distances apart are therefore known. These markings 4 are also visible in the recorded video pictures, see figures 3 and 4. The video picture can be calibrated using the information about the positions and distances apart of the markings. The position of a vehicle is determined by automatically moving a imaginary measurement line 5 from one of these markings in the video picture up to the vehicle to be measured. The displacement of the measurement line can be used to calculate the position of the vehicle accurately in that video picture.

Analysis of the video pictures recorded with the overview camera 1 also allows it to be determined if the vehicle is a private car or a lorry, for which latter vehicle there is a lower maximum speed. Other data can also be extracted from these video pictures, such as for example if the lights of the vehicle are defective, if the vehicle is too close behind the one in front, etc.

If it is determined that the speed of the vehicle is higher than the maximum permitted speed (or if another traffic violation is noticed), the vehicle can be registered with or without the driver. This occurs by making a detailed recording of the vehicle with the registration camera 2, see figure 4. The registration number 6 can be registered using image analysis and a detailed photograph of the driver can be obtained.

The numbers or time codes from the overview camera and the registration camera are continually compared with each other and any difference between them is stored with a reference to the pictures concerned, so that later the pictures from the different cameras that pertain to each other can be retrieved.

Other data can also be determined from the pictures recorded by the registration camera 2, such as if the driver of the vehicle is wearing a seat belt, if the driver is using the telephone while driving, etc.

The method with which it is possible to distinguish very small details, such as stickers, with normal light conditions and a relatively slow shutter speed is described below.

The overview camera 1 points from above towards the motorway and determines the speed of an approaching car from two (or more) successive pictures. Using this now known speed a drive mechanism is activated to turn a mirror (not shown in the figures), which is present in front of the lens of the registration camera 2. This mirror is turned at a speed attuned to the speed of the approaching car (i.e. the mirror makes a slight movement).

The registration camera 2 points at the passing car (at a more acute angle than the overview camera). The car appears to be virtually stationary to the registration camera as the mirror turns at a speed attuned to the speed of the car. This means that there is virtually no movement of the car itself in the recorded picture (the surroundings do move in the picture but this is unimportant). This means a sharp picture of the car with a slow shutter speed so that little light is needed in spite of the high speed of the car.

Moreover, depending on the quality of the recorded pictures - which can be set automatically - a filter, for example a polarisation filter, can be activated or brought in front of the camera lens.

The above described arrangement and method are not only usable in a fixed set-up, they are also suitable for mobile use, i.e. in a moving vehicle.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Method for the determination of vehicle position and speed by recording the vehicles to be measured in a number of video pictures taken by a camera (1) successively at fixed time intervals and by analysing the recorded video pictures, whereby the video pictures are calibrated beforehand using markings (4) on a road, which have been marked on a road at known distances apart, so that positions and measurements in the video picture can be converted into actual positions and measurements, and whereby the method comprises the following steps for determining the speed of the vehicles:
- an initial position of a vehicle is determined at an initial point in time,
- a second position of a vehicle is determined at a later, second point in time,
- the average speed between the two positions is calculated from the difference between the first and second position and the time between the first and second point in time, and
- in which the positions of the vehicle are determined from several recorded video pictures,
**characterised in that**
- the initial and the second positions of the vehicle are determined by automatically moving in the video picture an imaginary measurement line (5) from the known position of one of the markings (4) to the position where the vehicle is located and by calculating the displacement of the measurement line, and
- the time between both points in time is determined by adding the number of recorded video pictures between the points in time and dividing the result by the number of recorded pictures per second.

2. Method according to claim 1, **characterised in that** in noticing a traffic violation from the vehicle data with a further camera (2), the registration number of the vehicle concerned and/or the picture of the driver of the vehicle concerned is recorded.

3. Method according to claim 2, **characterised in that** a mirror in front of the further camera, which reflects the picture to be recorded to the camera, is turned at a speed attuned to the speed of an approaching car.

4. Method according to claim 1, 2 or 3, **characterised in that** the successively recorded video pictures are numbered or provided with a time code (3).

5. Method according to claims 4 and 2, **characterised in that** the numbers or time codes (3) from the camera (1) and further camera (2) are compared with each other continually or after specific time intervals and any difference is registered with a reference to the pictures concerned.

## Patentansprüche

1. Methode zur Bestimmung der Position und der Geschwindigkeit eines Fahrzeugs durch Festhalten des Fahrzeugs auf nacheinander von einer Kamera (1) in festen Intervallen aufgenommenen Videobildern und Analyse dieser Videobilder, wobei vorher die Videobilder mithilfe von Markierungen (4) an einer Straße geeicht werden, die in bekannten Abständen an einer Straße angebracht sind, sodass die Positionen und Abstände auf dem Videobild in tatsächliche Positionen und Abstände umgerechnet werden können, wobei die Methode zur Bestimmung der Geschwindigkeit von Fahrzeugen folgende Schritte enthält:
- die Position des Fahrzeugs wird an einem ersten Zeitpunkt bestimmt;
- an einem zweiten Zeitpunkt wird wiederum die Position des Fahrzeugs bestimmt;
- aus dem Abstand zwischen der ersten und zweiten Position und der Zeit vom ersten bis zum zweiten Zeitpunkt wird die Durchschnittsgeschwindigkeit berechnet;
- wobei die Positionen des Fahrzeugs mithilfe von Videobildern bestimmt werden;
**dadurch gekennzeichnet, dass**
- die erste und zweite Position des Fahrzeugs bestimmt wird durch automatisches Verschieben einer imaginären Bezugslinie (5) im Videobild von einer vorab bekannten Position einer der Markierungen (4) zu der Position, wo das Fahrzeug sich befindet und durch Berechnung der Verschiebung der Bezugslinie;
- die Bestimmung der Zeit zwischen den beiden Zeitpunkten durch Zählen der aufgenommenen Videobilder zwischen den Zeitpunkten geschieht und diese dann durch die Zahl der aufgenommen Bilder pro Sekunde geteilt werden.

2. Methode gemäß Patentanspruch 1, **dadurch gekennzeichnet, dass** bei Feststellung eines Verkehrsdelikts anhand der Fahrzeugdaten mit einer weiteren Kamera (2) das Kennzeichen des Fahrzeugs und/oder ein Bild des Fahrzeugführers festgehalten werden.

3. Methode gemäß Patentanspruch 2, **dadurch gekennzeichnet, dass** ein vor der weiteren Kamera befindlicher Spiegel, der das aufgenommene Bild zur Kamera spiegelt, mit einer der Geschwindigkeit des sich nähernden Fahrzeugs angeglichenen Drehgeschwindigkeit gedreht wird.

4. Methode gemäß Patentanspruch 1, 2 oder 3, **dadurch gekennzeichnet, dass** die nacheinander aufgenommenen Videobilder nummeriert oder mit einem Zeitcode (3) versehen werden.

5. Methode gemäß Patentansprüche 4 und 2, **dadurch gekennzeichnet, dass** kontinuierlich oder zu einer bestimmten Zeit die Nummern oder der Zeitcode (3) der Kamera (1) und der weiteren Kamera (2) miteinander verglichen werden und gegebenenfalls eine Differenz unter Verweisung auf die betreffenden Bilder registriert wird.

## Revendications

1. Méthode de travail en vue de la détermination de la position et de la vitesse d'un véhicule en capturant des véhicules à mesurer sur différentes images vidéo prises par une caméra (1) l'une après l'autre à des intervalles de temps fixes et de l'analyse des images vidéo, les images vidéo étant préalablement à cela réglées à l'aide de marquages (4) sur une route, qui sont appliqués à des distances réciproques connues sur une route de sorte telle que les positions et les dimensions sur l'image vidéo peuvent être converties en positions et dimensions réelles, la méthode de travail comportant les étapes suivantes en vue de la détermination de la vitesse de véhicules :
- une première position d'un véhicule est déterminée à un premier moment,
- une deuxième position d'un véhicule est déterminée à un deuxième moment, et
- la vitesse moyenne entre les deux positions est calculée sur la base de la différence entre la première et la deuxième position et du temps qui s'écoule entre le premier et le deuxième moment, et
- les positions du véhicule sont déterminées sur la base de différentes images vidéo capturées,
**caractérisée en ce que**
- la première position et la deuxième position du véhicule sont déterminées en déplaçant automatiquement une ligne de mesure (5) imaginaire dans l'image vidéo à partir d'une position préalablement connue d'un des marquages (4) vers la position où le véhicule se trouve et en calculant le déplacement de la ligne de mesure et **en ce que**
- la détermination du temps écoulé entre les deux moments a lieu en comptant le nombre d'images vidéo capturées et en le divisant par le nombre d'image capturée par seconde.

2. Méthode de travail selon la revendication 1, **caractérisée en ce que**, en cas de constatation d'une infraction de la circulation, la plaque minéralogique du véhicule concerné et/ou la photo du conducteur du véhicule concerné peuvent être capturées à l'aide d'une autre caméra (2) sur la base des données du véhicule.

3. Méthode de travail selon la revendication 2, **caractérisée en ce qu'**un miroir présent devant l'autre caméra, qui reflète l'image à prendre vers la caméra, est déformé moyennant une vitesse de rotation adaptée à la vitesse d'un véhicule à l'approche.

4. Méthode de travail selon les revendications 1, 2 ou 3, **caractérisée en ce que** les images vidéo capturées successivement sont numérotées ou dotées d'un code de temps (3).

5. Méthode de travail selon les revendications 4 et 2, **caractérisée en ce que** les numéros ou le code de temps (3) de la caméra (1) et de l'autre caméra (2) sont comparés les uns aux autres, en permanence ou moyennant un intervalle de temps déterminé, et qu'une éventuelle différence est enregistrée avec référence aux images concernées.
